# FASCICULE DE BREVET EUROPEEN

(11) **EP 3 014 165 B1**
(45) Date de publication et mention de la délivrance du brevet: **13.03.2019**
(21) Numéro de dépôt: 14738572.8
(22) Date de dépôt: 24.06.2014
(51) Int. Cl.: F16L 59/065, E04B 1/80, F17C 13/00

(54) **BLOC ISOLANT SOUS VIDE**
VAKUUMISOLATIONSEINHEIT
VACUUM ISOLATION UNIT

(30) Priorité: 25.06.2013 FR 1356057
(43) Date de publication de la demande: 04.05.2016
(73) Titulaire: GAZTRANSPORT ET TECHNIGAZ, 78470 Saint-Rémy-lès-Chevreuse (FR)
(72) Inventeur: DELETRE, Bruno, F-78000 Versailles (FR); CAPITAINE, Benoît, F-78140 Velizy Villacoublay (FR); THENARD, Nicolas, F-78117 Toussus Le Noble (FR); MOREL, Benoît, F-91150 Etampes (FR)
(74) Mandataire: Loyer & Abello
(86) Numéro de dépôt international: PCT/FR2014/051562
(87) Numéro de publication internationale: WO 2014/207361

(56) Documents cités:
- EP-A1- 1 160 524
- EP-A2- 0 263 511
- WO-A1-2013/140816

## Description

### Domaine technique

L'invention se rapporte au domaine des blocs isolants sous vide, et en particulier aux blocs isolants sous vide destinés à être intégrés à une paroi de cuve de stockage de fluide cryogénique.

### Arrière-plan technologique

Le brevet EP 0263511 présente un bloc isolant dans lequel une âme en matériau isolant compressé est recouverte sur chacune de ses faces par une feuille étanche hermétique. Ces feuilles sont soudées entre elles le long d'une bordure périphérique de l'âme à l'exception d'un unique passage dans lequel est introduit un tube d'évacuation. Ce tube d'évacuation permet de réaliser le vide dans le bloc isolant. Une fois le vide obtenu, le passage est fermé hermétiquement puisque les feuilles sont soudées entre elles au niveau du passage au-delà du tube d'évacuation et définissent ainsi une bordure ou bande de soudure entourant l'âme et le tube est alors retiré. Les feuilles scellées forment ainsi conjointement une enveloppe étanche et hermétique définissant un espace interne dans lequel est logée l'âme. On obtient finalement un bloc isolant sous vide sans aucun tube d'évacuation et présentant une forme adaptée à son utilisation, par exemple parallélépipédique ou incurvée afin d'être intégrée à une cuve. Une fois l'enveloppe scellée, une dépression est maintenue dans l'espace interne de l'enveloppe. De tels blocs isolants sont appelés panneaux isolant sous vide. L'unique figure de ce brevet montre une vue en coupe d'un bloc isolant illustrant à la fois le tube servant à la réalisation du vide et la soudure qui doit être réalisée au niveau du passage au-delà du tube d'évacuation, ce dernier étant ensuite retiré afin d'obtenir le panneau sous vide dans sa forme utilisée. Cette figure à but didactique ne représente pas un mode de réalisation effectif du panneau isolant sous vide, lequel ne comporte au final aucun tube d'évacuation.

Le brevet EP1160524 décrit un procédé de mise en forme de blocs isolants déjà sous vide selon une forme particulière afin de pouvoir utiliser de tels blocs par exemple autour d'une canalisation. Un tel bloc est constitué de matériau isolant recouvert d'un film laminé étanche au gaz. Ce film laminé est soudé autour du matériau isolant après mise sous vide de l'espace interne qu'il délimite. Dans un mode de réalisation particulier et représenté en figure 8 de ce brevet, le bloc isolant peut présenter des encoches afin de faciliter le pliage dudit matériau isolant destiné à lui donner la forme souhaitée. Ces encoches réduisent localement l'épaisseur du bloc isolant facilitant sa déformation et réduisant la chaleur nécessaire à sa déformation. Lorsque de telles encoches sont réalisées, le film étanche au gaz est plaqué contre ces encoches sous l'effet du vide créé dans le bloc isolant.

### Résumé

Les inventeurs ont dans l'idée générale d'utiliser une pluralité de ces panneaux ensemble par exemple dans la réalisation d'une barrière isolante de cuve pour méthanier destinée à contenir du gaz naturel liquide (GNL).

La présence d'une dépression dans l'enveloppe permet d'obtenir un panneau ayant d'excellentes caractéristiques d'isolation. Il est donc important non seulement de choisir pour l'enveloppe un matériau qui soit hermétique et très peu perméable aux gaz mais également de s'assurer de conserver l'intégrité physique de l'enveloppe afin que l'espace interne de l'enveloppe dans lequel est logé l'âme reste en dépression par rapport à l'environnement extérieur du panneau. Dans la suite de la description, un panneau présentant une dépression est appelé panneau dans un état opérationnel.

L'inventeur a observé que, même si les enveloppes sont optimisées pour limiter le passage de molécules gazeuses et donc la remontée en pression dans l'espace interne, ce phénomène est néanmoins toujours effectif. De plus, la présence lors de la fabrication du panneau ou l'apparition durant la vie du panneau de défauts, même infimes, sur l'enveloppe peut induire une cinétique de remontée de pression plus rapide. Une telle remontée en pression dans l'espace interne de l'enveloppe conduit à un rééquilibrage de pression entre ledit espace interne et l'environnement extérieur entourant le panneau isolant au terme de quelques mois ou années.

En cas d'apparition d'une remontée en pression de l'espace interne de l'enveloppe, par exemple lors d'une remontée rapide de température de l'environnement extérieur entourant un panneau qui était utilisé à une température froide et qui n'est plus dans son état opérationnel, i.e qui n'est plus sous vide du fait de la migration de gaz dans son espace interne, une vitesse de changement de pression bien supérieure à la cinétique de diffusion de gaz à travers l'enveloppe a pu être observée dans l'espace interne. Ainsi, de manière surprenante, un panneau isolant sous vide peut, dans certaines conditions, présenter un espace interne en surpression par rapport à son environnement extérieur. Une surpression dans l'espace interne d'un panneau isolant engendre une déformation dudit panneau, celui-ci prenant alors un aspect bombé.

Selon un mode de réalisation, l'invention fournit un bloc isolant selon une des revendications 1 à 13.

Selon un mode de réalisation, l'élément de dégradation comporte une zone de rupture de l'enveloppe, la zone de rupture étant apte à se dégrader préalablement aux autres zones constitutives de l'enveloppe en réponse à une surpression dans l'espace interne de l'enveloppe par rapport à l'environnement extérieur du bloc isolant.

Selon un mode de réalisation, la zone de rupture de l'enveloppe présente une épaisseur inférieure à l'épaisseur de l'enveloppe hors de la zone de rupture, la zone de rupture ayant une résistance mécanique à la surpression dans l'espace interne de l'enveloppe par rapport à l'environnement extérieur du bloc isolant inférieure à la résistance mécanique de l'enveloppe hors de la zone de rupture.

Selon un mode de réalisation, l'enveloppe comporte une pluralité de feuilles entourant l'âme, la pluralité de feuilles étant soudées ensemble en périphérie extérieure du bloc isolant le long d'une bordure de soudure, l'enveloppe comportant une soudure de la pluralité de feuilles formant une zone de concentration des contraintes apte à concentrer des contraintes de pelage au niveau de ladite zone de concentration des contraintes en réponse à une surpression dans l'espace interne de l'enveloppe par rapport à l'environnement extérieur du bloc isolant, la zone de concentration des contraintes comprenant la zone de rupture.

Selon un mode de réalisation, l'enveloppe comporte un point de soudure supplémentaire réalisé entre la pluralité de feuilles, le point de soudure étant situé à l'intérieur d'un périmètre défini par la bordure de soudure, ledit point de soudure formant ladite zone de concentration des contraintes.

Selon un mode de réalisation, le point de soudure présente une forme triangulaire, un coté proximal du point de soudure triangulaire étant parallèle à une section de la bande de soudure située en regard dudit point de soudure.

Selon un mode de réalisation, la bordure de soudure présente une irrégularité saillante s'étendant vers l'intérieur du bloc isolant, l'irrégularité formant ledit point de concentration des contraintes.

Selon un mode de réalisation, l'irrégularité de la bordure de soudure forme une pointe saillante s'étendant vers l'intérieur du bloc isolant, la pointe comportant une section proximale plane parallèle à une section régulière de la bande de soudure et une section de jonction reliant la section proximale et la section régulière de la bande de soudure.

Selon un mode de réalisation, l'élément de dégradation de l'enveloppe comporte un élément de déchirement rapporté présentant un angle vif, l'élément de déchirement étant disposé de manière qu'une surpression dans l'espace interne de l'enveloppe par rapport à l'environnement extérieur du bloc isolant amène l'angle vif de l'élément rapporté et l'enveloppe en contact l'un de l'autre de manière à dégrader l'enveloppe.

Selon un mode de réalisation, l'élément de déchirement rapporté est situé entre l'enveloppe et l'âme du bloc isolant, l'élément de déchirement rapporté comportant une partie fixe par rapport à l'âme du bloc isolant et une partie mobile par rapport à l'âme du bloc isolant, l'enveloppe comportant une première partie d'enveloppe solidaire en déplacement de la partie mobile de l'élément rapporté d'une part et, d'autre part, une seconde partie d'enveloppe solidaire de la partie fixe de l'élément de déchirement rapporté, la première partie d'enveloppe étant apte à éloigner de l'âme la partie mobile de l'élément de déchirement par déformation de l'enveloppe en réponse à la surpression dans l'espace interne de l'enveloppe par rapport à l'environnement extérieur du bloc isolant, la partie mobile de l'élément de déchirement rapporté comportant en outre un angle vif apte à déchirer l'enveloppe en entrant au contact de l'enveloppe en réponse à la surpression.

Selon un mode de réalisation, dans l'état opérationnel du bloc isolant, l'angle vif de la partie mobile de l'élément de déchirement rapporté est escamoté dans un logement de la partie fixe de l'élément de déchirement rapporté, un déplacement de la partie mobile de l'élément de déchirement rapporté en réponse à la surpression étant apte à déplacer l'angle vif hors de son logement et à amener l'angle vif de la partie mobile de l'élément rapporté en contact avec l'enveloppe.

Selon un mode de réalisation, l'élément rapporté est situé hors de l'espace interne de l'enveloppe et est fixe par rapport à l'âme du bloc isolant, l'angle vif de l'élément rapporté étant en vis-à-vis d'une portion déformable de l'enveloppe dans l'état opérationnel du bloc isolant, la portion déformable de l'enveloppe étant apte à se déchirer au contact de l'angle vif en réponse à la surpression.

Selon un mode de réalisation, le bloc isolant comporte en outre :
- une enceinte extérieure fermée formant un réceptacle, éventuellement de forme complémentaire à l'enveloppe externe, l'enveloppe externe étant logée dans ledit réceptacle, et
- un matériau de calage isolant et compressible inséré entre l'enceinte extérieure et l'enveloppe,
- l'élément de déchirement étant disposé sur une face interne de l'enceinte, l'angle vif de l'élément de déchirement rapporté étant en vis-à-vis d'une portion déformable de l'enveloppe dans l'état opérationnel du bloc isolant, la portion déformable de l'enveloppe étant apte à se déchirer au contact de l'angle vif en réponse à la surpression.

Selon un mode de réalisation, une matière isolante et non compressible en réponse à une surpression dans l'espace interne de l'enveloppe par rapport à l'environnement extérieur est située dans le réceptacle formé par l'enceinte extérieure entre l'enveloppe et un fond de l'enceinte extérieure, l'élément de déchirement étant disposé sur la face interne d'un couvercle de l'enceinte extérieure.

Selon un mode de réalisation, le bloc isolant comporte un câble dont une première extrémité est ancrée sur l'enveloppe, à un premier point d'ancrage, le câble se développant le long d'une face externe de l'enveloppe présentant dans un état opérationnel du bloc isolant une surface plane et dans un état de surpression de l'espace interne de l'enveloppe une surface bombée vers l'extérieur, le bombement exerçant sur le câble une tension, ladite tension du câble étant apte à apte à actionner un élément de dégradation de l'enveloppe.

Selon un mode de réalisation, la deuxième extrémité du câble est ancrée sur une zone de rupture de l'enveloppe, de sorte que la tension du câble exerce une force de traction sur une zone de rupture de l'enveloppe, la zone de rupture étant apte à se dégrader préalablement aux autres zones constitutives de l'enveloppe en présence de la traction exercée par la tension du câble.

Selon un mode de réalisation, l'élément de dégradation de l'enveloppe comporte un élément de déchirement rapporté présentant un angle vif, une seconde extrémité du câble étant ancrée sur l'enveloppe, le câble comportant une portion en prise sur l'élément de déchirement rapporté de manière à ce qu'une tension du câble exerce sur l'élément de déchirement rapporté une force de poussée apte à amener l'angle vif dudit élément de déchirement rapporté en contact avec l'enveloppe.

Selon un mode de réalisation, une seconde extrémité du câble est ancrée à un élément de dégradation de l'enveloppe comportant un angle vif, une tension du câble en réponse à une surpression dans l'enveloppe exerce sur l'élément de déchirement une force de traction apte à amener l'angle vif dudit élément de déchirement rapporté en contact avec l'enveloppe.

Une idée à la base de l'invention est de permettre l'évacuation de la surpression observée dans un bloc isolant en cas d'usure ou de défaut dans l'enveloppe entourant l'âme.

Certains aspects de l'invention partent de l'idée de dégrader l'enveloppe afin de permettre l'évacuation du gaz contenu dans l'enveloppe. Une idée à la base de l'invention est d'éviter, ou tout le moins de limiter, la déformation du panneau isolant en cas de surpression dans son espace interne par rapport à son environnement extérieur. En évitant une déformation du panneau, le dispositif selon l'invention évite toute dégradation des éléments entourant le panneau défectueux par pression de celui-ci sur les éléments l'entourant. Une idée à la base de l'invention est de dégrader le panneau lors de l'apparition d'une surpression pour libérer le gaz retenu prisonnier dans son espace interne. Un tel panneau dégradé ne risque plus d'éclater au cours d'une opération de maintenance ni de libérer son contenu en présence d'un opérateur de maintenance.

Certains aspects de l'invention partent de l'idée de dégrader l'enveloppe à l'aide d'un déchirement, d'un percement, par cisaillement ou encore par la rupture de l'enveloppe en une zone de rupture donnée. Une idée à la base de l'invention est de s'assurer que la dégradation de l'enveloppe est réalisée uniquement en présence d'une surpression dans l'espace interne. Un aspect de l'invention à pour origine de prévoir la présence d'un seuil minimal de surpression pour lequel l'enveloppe se déchirerait.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- La figure 1A est une vue en coupe d'un panneau isolant sous vide avec un détail agrandi de la feuille supérieure de l'enveloppe et un détail agrandi de la feuille inférieure de l'enveloppe ;
- La figure 1B est une vue en coupe d'un panneau isolant tel qu'en figure 1A présentant un espace interne en surpression par rapport à son environnement extérieur ;
- Les figures 2A à 2C sont des vues du dessus d'une bande de soudure selon des variantes de réalisation dans un panneau isolant sous vide tel qu'en figure 1A, les variantes des figures 2A et 2B ne formant pas partie de l'invention ;
- Les figures 3A et 3B sont des vues du dessus d'un exemple de réalisation d'un élément de déchirement rapporté selon l'invention ;
- Les figure 3C et 3D sont des vues en coupe partielle d'un panneau isolant, respectivement tel qu'en figure 1A et 1B, intégrant un élément de déchirement rapporté des figures 3A ou 3B ;
- La figure 4A est une vue du dessus d'une variante de réalisation de l'élément de déchirement rapporté des figures 3A et 3B;
- Les figure 4B et 4C sont des vues en coupe partielle d'un panneau isolant, respectivement tel qu'en figure 1A et 1B, dans lesquels sont intégrés un élément de déchirement rapporté de la figure 4A ;
- Les figures 5A et 5B sont des vues en coupe d'une variante de réalisation d'un panneau isolant respectivement tel qu'en figure 1A et 1B intégrés dans un caisson ;
- Les figures 6A et 6B sont des vues en coupe d'une autre variante de réalisation de panneaux isolants respectivement tels qu'en figure 1A et 1B comportant un élément de déchirement rapporté ;
- La figure 7 est une vue en coupe partielle d'un mode de réalisation d'un panneau isolant de la figure 1A comportant une soupape de sécurité ;
- La figure 8A et 8B sont des vues en coupe partielle d'un mode de réalisation de panneau isolant de la figure 1A comportant un élément de déchirement rapporté sur l'enveloppe ;
- La figure 8C est une vue en coupe partielle d'un panneau isolant tel qu'en figure 1B comportant un élément de déchirement de la figure 8A ;
- Les figures 9A et 9B sont des vues en coupe longitudinale d'un panneau, respectivement tels qu'en figure 1A et 1B, comportant un harpon ;
- La figure 9C est une vue en coupe transversale partielle d'un panneau isolant de la figure 9A dans une variante de réalisation.
- Les figures 10A et 10B sont des vues partielles respectivement en coupe et du dessus d'un panneau isolant sous vide comportant une enveloppe rigide déformable présentant une zone de rupture ;
- Les figures 11A et 11B sont des vues en coupe d'une variante de réalisation d'un panneau isolant respectivement tel qu'en figure 5A et 5B intégrés dans une variante de caisson ;

### Description détaillée de modes de réalisation

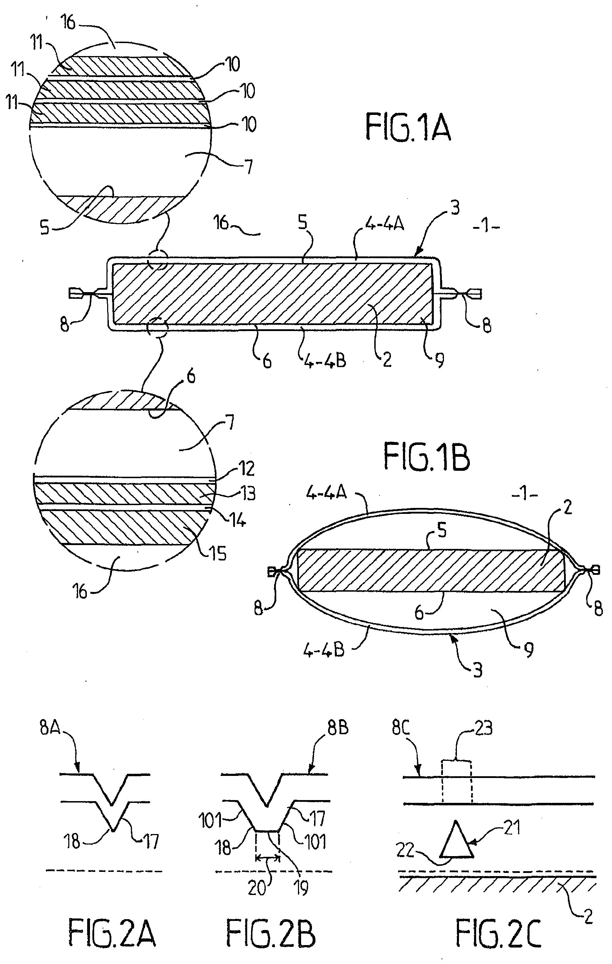

La figure 1A représente une vue en coupe d'un panneau isolant sous vide avec un détail agrandi de la feuille supérieure 4A de l'enveloppe et un détail agrandi de la feuille inférieure 4B de l'enveloppe.

Un panneau isolant 1 comporte une âme 2 entourée d'une enveloppe 3 scellée hermétiquement autour de l'âme 2. L'âme 2 est réalisée en une matière poreuse dont la porosité présente une fraction volumique supérieure à 90% et la taille moyenne des cavités est idéalement inférieure à 100µm. L'âme 2 est conditionnée par compression sous la forme d'une pièce parallélépipédique rectangle. Ce conditionnement d'une part assure une rigidité à l'âme 2 permettant sa manipulation et, d'autre part, permet à l'âme 2 de supporter la pression atmosphérique une fois mise sous vide. Par exemple, l'âme 2 est réalisée en poudre de silice avec agent opacifiant, et/ou en fibres synthétiques ou naturelles chargées en particules liantes.

L'enveloppe 3 est réalisée dans une matière hermétique et très peu perméable au gaz. L'enveloppe 3 est composée de deux feuilles 4 multicouches d'une centaine de microns d'épaisseur. Une première feuille 4A est disposée contre une face supérieure 5 de l'âme 2. Une seconde feuille 4B est disposée le long d'une face inférieure 6 de l'âme 2, ladite face inférieure 6 étant la face de l'âme 2 opposée à la face supérieure 5. Les dimensions des feuilles 4 sont telles qu'elles peuvent être jointes en périphérie de l'âme 2, chaque feuille 4 présentant des dimensions supérieures aux dimensions de la face sur laquelle elle est disposée. Chaque feuille 4 comporte une couche de soudure 7 constituée en matière plastique, par exemple en polyéthylène à basse densité linéaire (LLDPE). Les deux feuilles 4 sont soudées entre elles par fusion de leurs couches de soudure 7 ensemble, cette fusion formant une bande de soudure 8. Une telle soudure est réalisée par tout procédé connu de l'homme de l'art, par exemple par un procédé ultrason ou par un pressage thermique. La bande de soudure 8 est réalisée sur toute la périphérie de l'âme 2, les deux feuilles 4A et 4B définissant alors conjointement l'enveloppe 3 dont un espace interne 9 sert de logement à l'âme 2. Le scellage de l'enveloppe 3 permet de conditionner l'âme sous vide par exemple à une pression absolue à 10⁻¹ mbar en début de vie du panneau isolant 1. Afin de mettre sous vide l'âme 2, le dernier scellage est réalisé sous cloche à vide.

Dans une variante non représentée, l'âme du panneau peut être réalisée en poudre de silice insérée dans une enveloppe ayant trois côtés pré-scellés formant un réceptacle pour la poudre de silice. La soudure du dernier côté de l'enveloppe puis la mise sous vide de l'espace interne rigidifiant le panneau 1. L'âme du panneau peut être par ailleurs réalisée dans de nombreux matériaux isolants comme des fibres synthétiques ou naturelles non-liées, des poudres avec matériaux alvéolaire et présenter une rigidité réduite. De même, dans des variantes non représentées, les soudures entre les deux feuilles 4A et 4B ne sont pas réalisées en périphérie de l'âme. En outre, l'âme peut également n'être entourée que d'une unique feuille repliée de manière à entourer entièrement l'âme à elle seule.

Selon une première variante, représentée en agrandi de la feuille supérieure 4A, la feuille 4A comporte en sus de la couche de soudure 7 trois couches métallique 10, par exemple en aluminium de 50nm, intercalées avec trois couches de matière plastique 11, par exemple en polytéréphtalate d'éthylène (PET), en nylon, en polypropylène (PP), en polyéthylène (PE) de 12 µm. Cette première variante offre un taux de diffusion très bas d'environ 2 mbar par année de vie pour un panneau 1 de 10mm.

Dans une seconde variante, représentée en agrandi de la feuille inférieure 4B, la feuille inférieure 4B comporte :
- une première couche métallique 12 de 50nm en aluminium disposée sur la couche de soudure 7 ;
- une première couche plastique 13 de 12µm de PET disposée sur la première couche métallique 12 ;
- une seconde couche métallique 14 d'aluminium de 6µm disposée sur la première couche plastique 13 ;
- une seconde couche plastique 15 de PET de 25 µm disposée sur la seconde couche métallique 14. Cette seconde couche 15 de PET constitue la face extérieure de la feuille 4B, typiquement la face de la feuille 4B en contact avec un environnement extérieur 16 au panneau 1.

Cette seconde variante assure un taux de diffusion extrêmement bas, de l'ordre de 0.2 mbar par année d'existence pour un panneau 1 de 10 mm d'épaisseur, mais impose la présence de ponts thermiques.

Après une certaine durée de vie du panneau isolant 1, le vide dans l'espace interne 9 est amené à disparaitre, du gaz de l'environnement extérieur 16 pénétrant progressivement dans l'espace interne 9. L'enveloppe 3 présentant un taux de diffusion très bas, la pénétration du gaz dans l'espace interne 9 se fait de manière extrêmement lente et progressive. De la même manière, ce faible taux de diffusion de l'enveloppe empêche tout gaz contenu dans l'espace interne 9 d'être libéré rapidement. Ainsi, lors d'un changement de température et/ou de pression brusque de l'environnement extérieur 16, le gaz ayant pénétré dans l'espace interne 9 ne peut pas être libéré de manière suffisamment rapide pour permettre une diminution de la pression dans l'espace interne 9 équivalente à la diminution de la pression exercée par l'environnement extérieur 16 sur le panneau 1. Il résulte donc de l'emprisonnement du gaz que l'espace interne 9 se retrouve rapidement en surpression par rapport à son environnement extérieur 16. Cette surpression exerce alors une force sur les feuilles 4 qui se gonflent sous son effet tel que représenté en figure 1B.

La déformation du panneau 1 engendre un problème de place, le panneau 1 occupant dans cet état de gonflement un espace largement supérieur à celui occupé dans son état sous vide. La déformation du panneau 1 occasionne également un danger pour les personnes pouvant circuler à proximité du panneau 1 déformé, un éclatement de l'enveloppe 3, par exemple lors d'une opération de maintenance, pouvant libérer tout le gaz contenu dans l'espace interne 9 d'un seul coup. Cet éclatement est d'autant plus dangereux si le gaz contenu dans l'espace interne 9 est un gaz explosif tel que par exemple du gaz naturel.

Les figures 2A à 2C présentent des vues du dessus d'une bande de soudure selon des variantes de réalisation dans un panneau isolant sous vide tel qu'en figure 1A.

La bande de soudure 8 est réalisée par une machine, ce qui assure une réalisation droite et régulière de la bande de soudure 8 tout le long de la périphérie de l'âme 2 du panneau 1. Afin d'obtenir un panneau ayant une forme parfaitement parallélépipédique, sans laisser les bandes de soudure 8 apparentes, une fois le panneau 1 mis sous vide, des bandes latérales dépassant de la périphérie de l'âme 2 sont repliées le long de l'âme 2. Les zones de pliages de ces bandes latérales sont représentées en pointillés sur les figures 2A à 2C.

Dans un premier mode de réalisation représenté en figure 2A, la bande de soudure 8A présente une zone saillante 17 en forme de pointe orientée vers l'intérieur du panneau 1. En présence d'une surpression dans l'espace interne 9, la bande de soudure 8A présente un front de pelage uniforme à l'exception de la zone saillante 17 faisant saillie dans l'espace interne 9. Typiquement, une extrémité proximale 18 de la zone saillante 17 constitue un point de concentration des contraintes de pelage. Au niveau de cette extrémité proximale 18, les forces appliquées par la surpression sont bien supérieures aux forces appliquées par cette même surpression sur le reste du front de pelage de la bande de soudure 8A. Typiquement, la résistance mécanique de l'extrémité proximale 18 est bien plus faible face à la surpression que la résistance mécanique du reste de la bande de soudure 8A. Dès lors, en présence d'une surpression dans l'espace interne 9, la concentration de forces sur l'extrémité proximale 18 entraîne le déchirement de la zone saillante 17. Ce déchirement de la zone saillante 17 constitue une dégradation de l'enveloppe 3 mettant en communication l'espace interne 9 et l'environnement extérieur 16, permettant ainsi la libération du gaz prisonnier dans l'espace interne 9 et évitant la déformation du panneau 1.

Dans une variante de réalisation présentée en figure 2B, l'extrémité proximale 18 de la partie saillante 17 en pointe est coupée. Typiquement, la partie saillante est tronconique, c'est à dire qu'un coté proximal 19 de la partie saillante est plat et parallèle à la bande de soudure 8B depuis laquelle la partie saillante s'étend, une section de jonction 101 inclinée par rapport à la bande de soudure 8B et par rapport au côté proximal 19 reliant ladite bande de soudure 8B et le côté proximal 19. Une variation de la longueur 20 du côté proximal 19 permet de définir un seuil minimal de déchirement. Un seuil minimal de déchirement représente la force de pelage minimale à appliquer à la partie saillante 17 pour obtenir un déchirement de l'enveloppe 3 au niveau de la partie saillante 17. Typiquement, plus le côté proximal 19 est long, plus les efforts de pelage sont répartis sur le côté proximal 19, et donc plus la force de pelage nécessaire au déchirement de l'enveloppe 3 est grande. Ainsi, la surpression nécessaire pour générer une force de pelage apte à déchirer une partie saillante 17 telle que représentée en figure 2B est bien supérieure à la surpression nécessaire pour déchirer une partie saillante 17 telle qu'en figure 2A.

A titre d'exemple, dans le cas d'un panneau 1 de longueur 1.2 m et de largeur 0.15 m, une surpression interne de 15 mbar peut induire une contrainte cumulée de 252 N, à volume interne constant. Cette contrainte se trouverait normalement répartie sur tout le périmètre du panneau en l'absence de partie saillante 17. Le placement d'une partie saillante 17 en milieu d'un bord long du panneau 1 permet de concentrer toutes les contraintes de ce bord. Ainsi, un côté proximal 19 d'une longueur de 3 mm engendre une concentration de contraintes de 80N/mm.

Dans un troisième mode de réalisation présenté en figure 2C, la bande de soudure 8C est réalisée de manière classique, c'est-à-dire qu'elle fait toute la périphérie de l'âme 2 selon une épaisseur régulière. Un point de soudure supplémentaire 21 est réalisé en sus de la bande de soudure 8C. Ce point de soudure supplémentaire 21 est situé entre la bande de soudure 8C et l'âme 2. Le point de soudure supplémentaire 21 constitue un point de concentration des forces de contraintes en présence d'une surpression dans l'espace interne 9. En effet, lors de l'apparition d'une surpression dans l'espace interne 9, avant même qu'une force de pelage ne soit appliquée à la bande de soudure 8C, une force de pelage est appliquée au point de soudure supplémentaire 21. Cette concentration des forces provoque une déchirure à l'enveloppe 3 au niveau du point de soudure supplémentaire 21 en réponse à l'apparition d'une surpression dans l'espace interne 9.

Le point de soudure supplémentaire 21 est de forme triangulaire. Un côté proximal 22 de ce point de soudure supplémentaire 21 est parallèle à une section 23 la plus proche du point de soudure supplémentaire 21 de la bande de soudure 8C. Ce côté proximal 22 est le côté du point de soudure supplémentaire 21 le plus éloigné de la section 23 de la bande de soudure 8C. Tout comme le côté proximal 19 de la partie saillante 17 en regard de la figure 2B, le côté proximal 22 du point de soudure supplémentaire 21 définit un seuil de déchirement correspondant à une pression minimale à partir de laquelle le point de soudure supplémentaire 21 se déchire. Le rétrécissement du point de soudure supplémentaire 21 en se rapprochant de la bande de soudure 8C permet de faciliter la suite du déchirement une fois le seuil de déchirement atteint, assurant ainsi que la déchirure de l'enveloppe 3 est à même de mettre en communication l'espace interne 9 et l'environnement extérieur 16 du panneau 1.

Les modes de réalisation présentés en figure 2A, 2B ou 2C sont parfaitement compatibles et une série de ces parties saillantes 17 et/ou de ces points de soudure supplémentaires 21 peut être réalisée sur toute la périphérie de l'âme 2 du panneau 1. De même, dans un perfectionnement non représenté, des plaques rigides peuvent être collées sur les faces du panneau. Ainsi, l'effort induit par la pression interne est pleinement reporté sur tout le périmètre du VIP et donc, lorsque les bandes de soudures sont situées en périphérie, sur le point de soudure supplémentaire ou sur l'irrégularité de la bande de soudure.

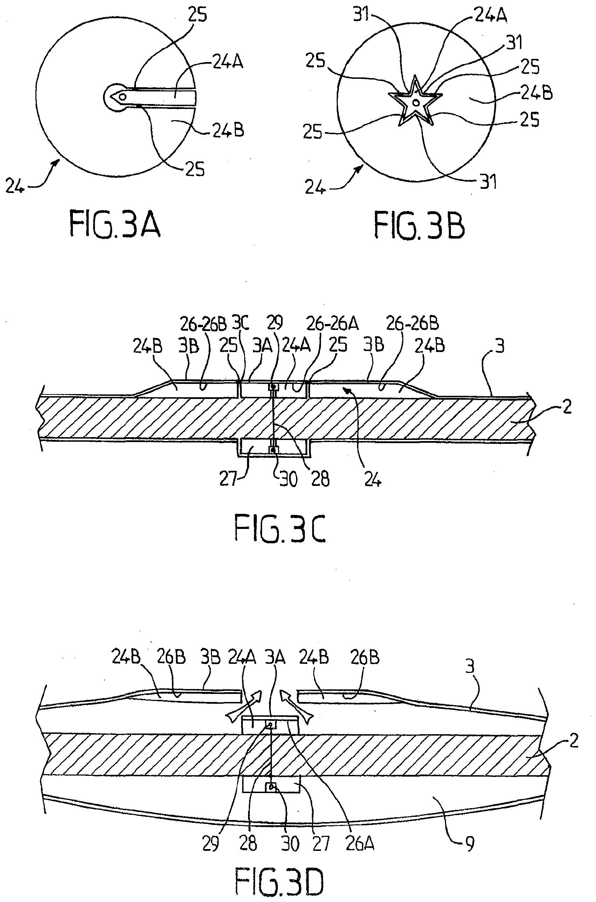

Les figures 3A et 3B sont des vues du dessus d'un exemple de réalisation d'un élément de déchirement rapporté.

Dans ce mode de réalisation, le panneau 1 comporte un élément de déchirement rapporté 24. L'élément de déchirement 24 a une forme de disque et comporte une première partie 24A et une seconde partie 24B de forme complémentaire à la première partie 24A. Les deux parties 24A et 24B sont liées entre elles par des points d'attaches 25. Ces points d'attaches 25 constituent des zones faibles présentant une résistance mécanique limitée. En présence d'une force de traction ou de cisaillement entre la première partie 24A et la seconde partie 24B, les points d'attaches 25 sont rompus et les deux parties 24A et 24B de l'élément de déchirement 24 se déplacent librement l'une par rapport à l'autre. Typiquement, la première partie24A et la seconde partie 24B sont prédécoupées entre elles de manière à permettre leur séparation facilement.

Les figure 3C et 3D sont des vues en coupe partielle d'un panneau isolant, respectivement tel qu'en figure 1A et 1B, intégrant un élément de déchirement rapporté des figures 3A ou 3B.

L'élément de déchirement 24 est monté dans le panneau 1 entre l'enveloppe 3 et l'âme 2. L'enveloppe 3 est soudée sur la totalité d'une face supérieure 26 de l'élément de déchirement 24. Une première section 3A de l'enveloppe 3 est soudée à une face 26A de la première partie 24A. Une seconde section 3B de l'enveloppe 3 est soudée à une face supérieure 26B de la seconde partie 24B. L'élément de déchirement 24 est en matière plastique, par exemple en LLDPE, afin de permettre la soudure entre la couche de soudure 7 de la feuille 4 de l'enveloppe 3 et la face supérieure 26 de l'élément de déchirement 24. Cette soudure entre l'enveloppe 3 et l'élément de déchirement 24 est réalisée après la mise sous vide du panneau 1.

La première partie 24A de l'élément de déchirement 24 est maintenue fixe par rapport à l'âme 2 du panneau 1. La seconde partie 24B est sans lien direct avec l'âme 2 du panneau 1. La fixation de la première partie 24A sur l'âme 2 est réalisée à l'aide d'un élément de maintien 27 disposé entre l'enveloppe 3 et l'âme 2 sur une face de l'âme opposée à la face sur laquelle est disposée l'élément de déchirement 24. La première partie 24A de l'élément de déchirement 24 et l'élément de maintien 27 sont reliés par un fil de rappel 28 traversant l'âme 2. Une première extrémité 29 du fil de rappel 28 est ancrée sur la première partie 24A de l'élément de déchirement 24. Une seconde extrémité 30 du fil de rappel 28 est ancrée sur l'élément de maintien 27. Le fil de rappel 28 peut être un fil souple passé à travers un orifice traversant de l'âme 2 réalisé après compression de l'âme 2 ou encore un fil semi rigide ou rigide inséré dans l'âme 2 avant son conditionnement par compression.

Dans un mode de réalisation non représenté, l'élément de maintien peut également être un second élément de déchirement rapporté, le fil de rappel étant ancré sur la partie centrale de ce second élément de déchirement rapporté. De même, la première partie de l'élément de déchirement rapporté peut être maintenue contre l'âme par tout moyen connu de l'homme de l'art et apte à résister aux contraintes exercées sur le panneau, vissage collage ou autre. La liaison entre l'enveloppe et la face supérieure de l'élément de déchirement rapporté décrite ci-dessus peut également être réalisée par collage à l'aide d'une colle classique ou thermofusible.

Lors de la mise sous vide du panneau 1, l'élément de déchirement 24 est maintenu intégralement contre l'âme 2 du panneau 1 par l'enveloppe 3. Lors de l'apparition d'une surpression dans l'espace interne 9, l'enveloppe 3 se déforme sous l'effet de la surpression. La seconde partie 24B de l'élément de déchirement 24 étant soudée à la section 3B de l'enveloppe 3 sans être liée directement à l'âme 2 du panneau 1, la déformation de l'enveloppe 3 exerce une traction sur la seconde partie 24B de l'élément de déchirement 24. La première partie 24A de l'élément de déchirement 24 est, elle, maintenue fixe contre l'âme 2 du panneau 1 par le fil de rappel 28. L'élément de déchirement 24 subit ainsi un cisaillement entre sa première partie 24A et sa seconde partie 24B. Ce cisaillement entraîne la rupture des points d'attaches 25 reliant la première partie 24A et la seconde partie 24B de l'élément de déchirement 24. La seconde partie 24B de l'élément de déchirement 24 n'étant plus maintenue contre l'âme 2 par les points d'attaches 25, la déformation de l'enveloppe 3 entraîne en déplacement la seconde partie 24B qui s"éloigne à la fois de l'âme 2 et de la première partie 24A de l'élément de déchirement 24. La présence des points d'attache 25, ainsi que le choix de leur résistance mécanique au cisaillement, permet de garantir que la seconde partie 24B ne se sépare de la première partie 24A de l'élément de déchirement 24 qu'en présence d'une certaine force de cisaillement, évitant ainsi tout risque de déplacement de la seconde partie 24B si celle-ci n'est pas entraînée par une déformation de l'enveloppe 3, par exemple lors d'une simple manipulation du panneau 1.

L'enveloppe 3 étant soudée à la fois à la première partie 24A et à la seconde partie 24B, une zone de jonction 3C de l'enveloppe 3 joignant la zone 3A de l'enveloppe à la zone 3B de l'enveloppe est mise sous tension par le déplacement relatif des deux parties 24A et 24B de l'élément de déchirement 24. La zone de soudure 3C n'est soudée ni sur la première partie 24A ni sur la seconde partie 24B de l'élément de déchirement 24. Sous l'effet de la tension, la zone 3C se déchire.

La première partie 24A (voir figure 3A) ou la seconde partie 24B (voir la figure 3B présentent au moins un angle vif 31. Le déplacement de la seconde partie 24B de l'élément de déchirement 24 impose un contact entre l'angle vif 31 et la zone 3C de l'enveloppe 3. Le contact entre l'angle vif 31 et la zone de jonction 3C de l'enveloppe associée à la tension exercée sur ladite zone de jonction 3C facilite le déchirement de l'enveloppe 3. Ce déchirement de l'enveloppe 3 met en communication l'espace interne 9 et l'environnement extérieur 16 du panneau isolant 1, permettant ainsi de libérer le gaz contenu dans l'espace interne 9.

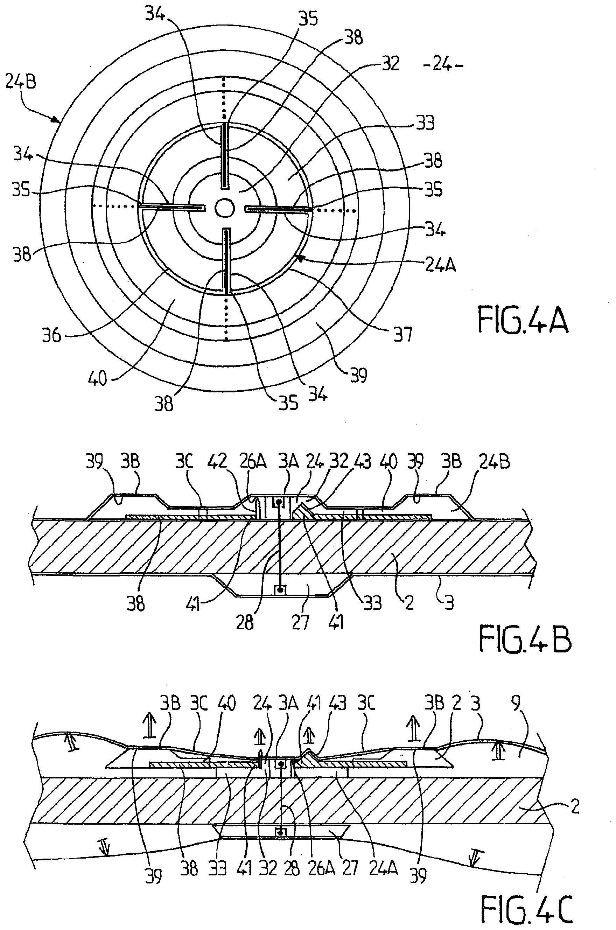

La figure 4A est une vue du dessus d'une variante de réalisation de l'élément de déchirement rapporté des figures 3A ou 3B.

Dans ce mode de réalisation, la première partie 24A de l'élément de déchirement 24 est de forme circulaire et comporte une partie centrale 32 entourée par une partie périphérique 33. La première partie 24A comporte des logements 34 s'étendant radialement depuis la partie centrale 32 jusqu'à une ouverture 35 située sur face latérale extérieure 36 de la partie périphérique 33. Ces logements 34 présentent une largeur telle que lorsque le panneau 1 est mis sous vide, l'enveloppe 3 ne pénètre pas de manière significative dans le logement 34, l'enveloppe 3 présentant tout au plus une légère rainure au niveau des logements 34. La section 3A de l'enveloppe 3 est soudée sur la partie centrale 32 de la première partie 24A de l'élément de déchirement 24.

La seconde partie 24B de l'élément de déchirement 24 est de forme circulaire. La seconde partie 24B comporte un orifice central traversant 37 de forme complémentaire à la forme extérieure de la première partie 24A de l'élément de déchirement 24. La seconde partie 24B comporte des lamelles de déchirement 38 faisant saillie dans l'orifice central traversant 37. Ces lamelles de déchirement 38 sont de formes complémentaires aux logements 34 de la première partie 24A de l'élément de déchirement 24. La zone 3B de l'enveloppe 3 est soudée sur un anneau de soudure 39 de la seconde partie 24B de l'élément de déchirement 24. L'anneau de soudure 39 de la seconde partie 24A est situé à distance de l'orifice central traversant 37. La zone de jonction 3C recouvre une zone 40 de la seconde partie 24A de l'élément de déchirement 24 séparant la section de soudure 39 de l'orifice central traversant 37. La zone de jonction 3C de l'enveloppe 3 recouvre également la partie périphérique 33 de la première partie 24A de l'élément de déchirement 24.

Les figures 4B et 4C sont des vues en coupe partielle d'un panneau isolant, respectivement tel qu'en figure 1A et 1B, dans lesquels sont intégrés un élément de déchirement rapporté de la figure 4A.

Comme pour le mode de réalisation présenté en regard des figures 3A à 3C, l'élément de déchirement 24 est inséré entre l'enveloppe 3 et l'âme 2. La première partie 24A de l'élément de déchirement 24 est maintenue fixe par rapport à l'âme par un fil de rappel 28. De même, la seconde partie 24B de l'élément de déchirement 24 n'est pas liée à l'âme 2.

La partie centrale 32 de la première partie 24A de l'élément de déchirement rapporté est plus épaisse que la partie périphérique 33 de la première partie 24A. De même, l'anneau de soudure 39 de la seconde partie 24B est plus épais que la section 40 de la seconde partie recouverte par la section 3C de l'enveloppe 3. La section 40 de la seconde partie 24B et la partie périphérique 33 de la première partie 24A forment ainsi une zone de concavité offrant une plus grande liberté de gonflement pour l'enveloppe 3 au niveau de la section 3C. Selon les variantes, la section 3C peut être plus ou moins étendue afin d'offrir à l'enveloppe une possibilité de débattement plus ou moins importante.

Les lamelles 38 présentent une hauteur inférieure à l'épaisseur de la première partie 24A. Chacune des lamelles 38 comporte à une extrémité proximale 41 une pointe perforante 42 ou une lame tranchante 43. Dans un état opérationnel du panneau 1 représenté en figure 4B, c'est-à-dire sous vide, l'enveloppe 3 est étroitement maintenue collée contre l'âme 2, les lamelles 38 sont logées dans les logements 34 de la première partie 24A de l'élément de déchirement 24. Typiquement, les lamelles 38 ainsi que les pointes 42 et les lames 43 sont escamotées par la première partie 24A de l'élément de déchirement 24.

En présence d'une surpression dans l'espace interne 9 (représenté en figure 4C), la seconde partie 24B de l'élément de déchirement est entraînée en déplacement par la déformation de l'enveloppe 3. Les lamelles 38 de la seconde partie 24B de l'élément de déchirement 24 sont également entraînées en déplacement et éloignées de l'âme 2. En s'éloignant de l'âme 2 les lamelles 38 sortent des logements 34. Plus particulièrement, les pointes 42 et lames 43 ressortent des logements 34 au niveau d'une face supérieure de la partie centrale 32 de la première partie 24A. Les pointes 42 et lames 43 des lamelles 38 entrent en contact avec l'enveloppe 3 et la déchirent. Cette déchirure de l'enveloppe met en communication l'espace interne 9 et l'environnement extérieur 16 du panneau isolant 1, autorisant ainsi la libération du gaz prisonnier dans l'espace interne.

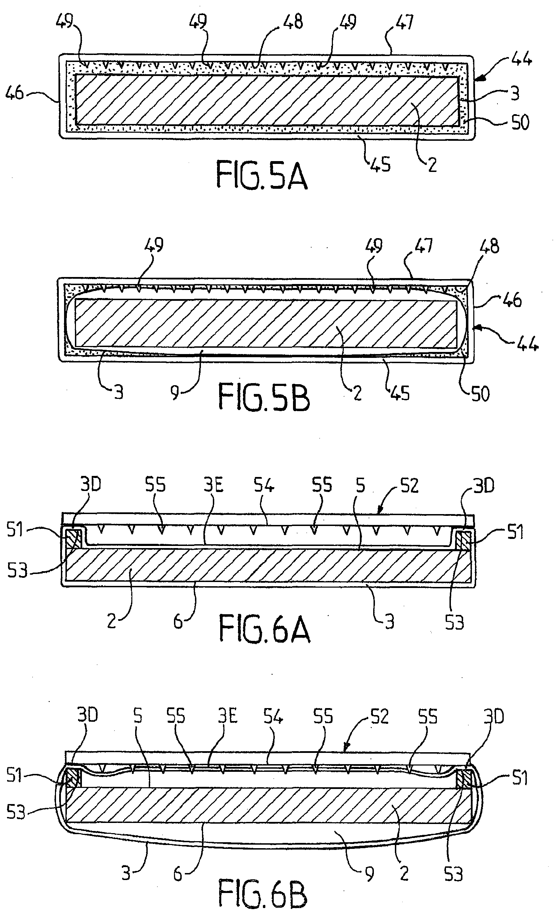

Les figures 5A et 5B sont des vues en coupe d'une variante de réalisation d'un panneau isolant respectivement tel qu'en figure 1A et 1B intégrés dans un caisson.

Les variantes présentées en figure 5A et 5B représentent un bloc isolant du type de ceux utilisés pour la réalisation d'une membrane d'isolation dans une cuve de méthanier. Un tel bloc isolant comporte un caisson 44 formant un réceptacle pour l'enveloppe 3. Le caisson 44 a une forme générale parallélépipédique et comporte un fond 45, des parois latérales 46 et un couvercle 47. Le caisson 44 est réalisé en matériau composite ou en contreplaqué.

Une face interne 48 du couvercle 47 comporte au moins une lame 49 faisant saillie à l'intérieur du caisson 44. Une couche de calage à 50 est disposée sur toute la périphérie de l'enveloppe 3 entre l'enveloppe 3 et les parois du caisson 44. Cette couche 50 est réalisée en matériau compressible isolant tel que de la ouate de cellulose ou de la laine de roche. L'épaisseur de la couche 50 est telle que la ou les lames 49 ne sont pas en contact avec l'enveloppe 3 dans l'état opérationnel du panneau 1 tel que sur la figure 5A. La lame 49 peut être remplacée par une pointe, une agrafe ou tout autre élément de percement.

En présence d'une surpression dans l'espace interne 9, tel que représenté en figure 5B, la déformation de l'enveloppe 3 modifie l'espace occupé par l'enveloppe 3 dans le caisson 44. Cette modification de l'espace occupé par l'enveloppe 3 dans le caisson 44 entraîne d'une part une compression de la couche 50 et, d'autre part, le contact entre l'enveloppe 3 et les lames 49 disposées sur la face interne 48 du couvercle 47. Ce contact entre l'enveloppe 3 et les lames 49 entraine le déchirement de l'enveloppe 3 et la libération du gaz contenu dans l'espace interne 9.

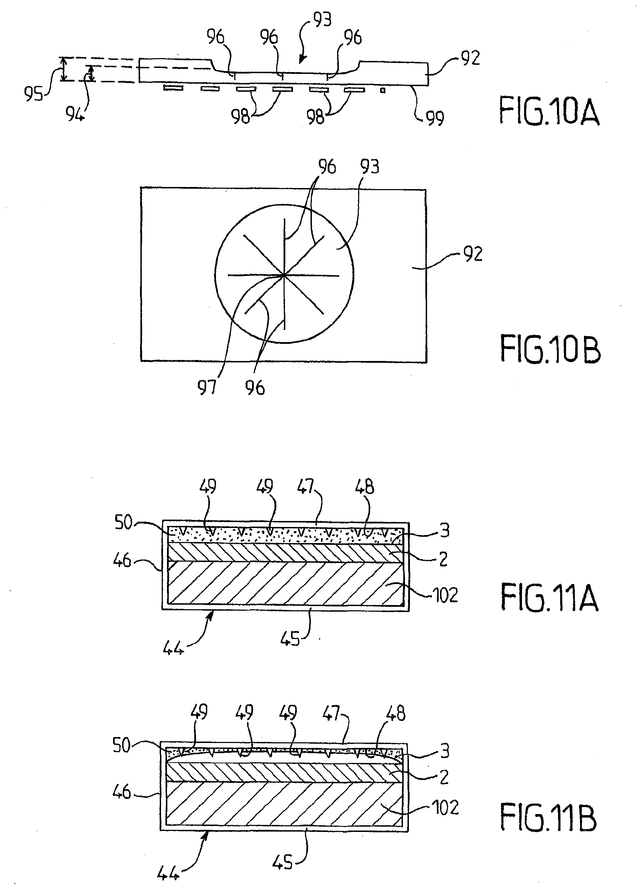

Les figures 11A et 11B sont des vues en coupe d'une variante de réalisation d'un panneau isolant respectivement tel qu'en figure 5A et 5B intégrés dans une variante de caisson.

Dans la variante représentée en figures 11A et 11B, le caisson 44 comporte, entre une face inférieure 80 du panneau 1 et le fond 45 du caisson 44, une couche de matière isolante 102 rigide. Une face supérieure 84 du panneau 1 et la face intérieure 48 du couvercle 47 du caisson 44 sont séparées par une couche isolante 50 compressible telle que de la laine de verre ou de la ouate de cellulose. Cette couche isolante rigide est par exemple une mousse polyuréthanne de densité 30kg/m³. Typiquement, une matière rigide est une matière qui ne se compresse pas lors de la déformation de l'enveloppe 3. Dans une telle variante, le panneau 1 présente par exemple une épaisseur de 2 à 3 cm pour un caisson d'une hauteur de 30 cm, de sorte que le panneau 1 n'occupe qu'environ 10% du logement formé par le caisson 44.

La figure 11A représente un caisson 44 dans lequel est logé un panneau 1 dans son état opérationnel. La figure 11B représente un caisson 44 dans lequel l'espace interne 9 du panneau 1 est en surpression par rapport à l'environnement extérieur 16. En réponse à la surpression, la couche isolante rigide 102 ne se compresse pas, contrairement à la couche isolante 50. De par cette différence de rigidité dans les couches isolantes entourant le panneau 1, l'enveloppe 3 se déforme plus facilement en direction du couvercle 47 du caisson en compressant la couche isolante 50. Cette déformation de l'enveloppe 3 en direction du couvercle 47 du caisson 44 l'amène au contact des lames 49 situées sur la face interne 48 du couvercle 47, ce contact entraînant le déchirement de l'enveloppe 3 et la libération du gaz contenu dans l'espace interne 9.

Dans un mode de réalisation non représenté, le panneau 1 est espacé des faces latérales 46 du caisson 44, la couche isolante 50 se développant également entre lesdites faces latérales 46 du caisson et le panneau 1. Ce mode de réalisation permet de donner un débattement au panneau 1 dans le caisson 44, facilitant ainsi son insertion sans empêcher ou diminuer de manière significative la déformation de la face supérieure 84 du panneau 1 en cas de surpression dans l'espace interne 9 du panneau 1.

Les figures 6A et 6B sont des vues en coupe d'une autre variante de réalisation de panneaux isolants respectivement tels qu'en figure 1A et 1B comportant un élément de déchirement rapporté.

Dans la variante présentée en figure 6A et 6B, deux inserts 51 sont fixés sur l'âme 2 le long de côtés opposés de la face supérieure 5 de l'âme 2. Une plaque 52 est fixée sur une section 3D de l'enveloppe 3 recouvrant une face supérieure 53 des inserts 51. La plaque 52 est réalisée en un matériau permettant le soudage de la plaque sur l'enveloppe, comme par exemple du LLDPE. Une face interne 54 de la plaque 52 en vis à vis d'une section 3E de l'enveloppe 3 comporte une série de pointes 55 en regard de la section 3E de l'enveloppe 3.

La fixation de la plaque 52 sur la section 3D de l'enveloppe garantie la présence d'un espace entre la plaque 52 et une section 3E de l'enveloppe 3 recouvrant l'âme 2 entre les deux inserts 51.

Dans l'état opérationnel tel que représenté en figure 6A, la section 3E de l'enveloppe 3 est maintenue collée contre l'âme 2 par la dépression dans l'espace interne 9. La section 3E de l'enveloppe 3 est ainsi maintenue à une distance au moins égale à l'épaisseur des inserts 51 de la série de pointe 55.

En cas de surpression dans l'espace interne 9 tel que représenté en regard de la figure 6B, la déformation de la section 3E l'enveloppe comble l'espace la séparant de la face interne 54 de la plaque 52. La section 3E de l'enveloppe vient au contact de la série de pointe 55 et se déchire, permettant ainsi la libération du gaz contenu dans l'espace interne 9.

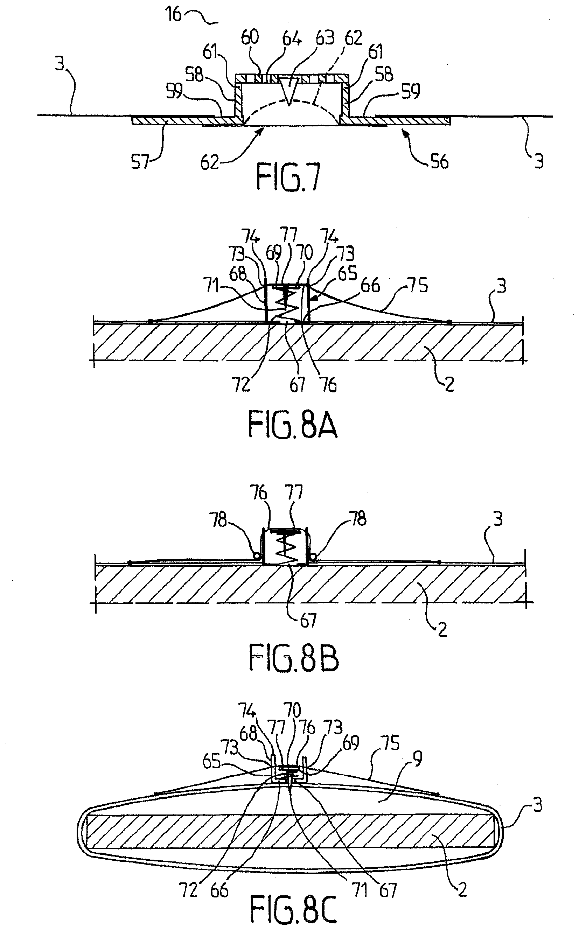

La figure 7 est une vue en coupe partielle d'un mode de réalisation d'un panneau isolant de la figure 1A comportant une soupape de sécurité.

Le mode de réalisation présenté en figure 7 comporte une soupape de sécurité 56. Cette soupape 56 est un élément rapporté soudé ou collé sur l'enveloppe 3. La soupape 56 de sécurité comporte une structure 57 en plastique par exemple en LLDPE permettant son incorporation à l'enveloppe 3 par soudure ou collage. La structure 57 peut également être en métal pour permettre une incorporation à l'enveloppe par collage.

La structure 57 de la soupape 56 comporte une paroi périphérique 58 faisant saillie depuis une face extérieure 59 de la structure 57 vers l'environnement extérieur 16. Une grille 60 est installée sur une extrémité distale 61 de la paroi périphérique 58, ladite extrémité distale 61 étant opposée à la structure 57 par rapport à la paroi périphérique 58.

Une partie centrale circulaire 62 de la soupape 56 est réalisée dans un matériau aux propriétés de déformation supérieures aux propriétés de déformation de l'enveloppe 3. Cette partie centrale 62 est fixée à une face inférieure de la structure de manière à combler un orifice central circulaire de la structure et garantir l'étanchéité de l'enveloppe 3 dans l'état opérationnel du panneau 1. Dans cette configuration, la partie centrale 62 est entourée par la structure 57. La grille 60 est en regard de la partie centrale circulaire 62. Une pointe de percement 63 est montée sur une face inférieure 64 de la grille 60 en regard de la partie centrale 62.

En cas d'apparition d'une surpression dans l'espace interne 9, la partie centrale 62 de la soupape 56 se déforme préalablement à la déformation de l'enveloppe 3. La partie centrale 62 prend alors une forme bombée ainsi que représenté en pointillé sur la figure 7. La déformation de la partie centrale 62 amène celle-ci au contact de la pointe 63. Le contact entre la pointe 63 et la partie centrale 62 entraine le déchirement de ladite partie centrale 62, mettant en contact l'espace interne 9 et l'environnement extérieur 16 du panneau 1. Le percement de la partie centrale 62 permet la libération du gaz contenu dans l'espace interne 9.

Dans une variante non représentée, une soupape de sécurité peut comporter une partie centrale aux caractéristiques de résistance mécanique inférieures à la résistance mécanique de l'enveloppe, une déformation de l'enveloppe en réponse à une surpression peut alors amener la partie centrale à se déchirer.

La figure 8A et 8B sont des vues en coupe partielle d'un mode de réalisation de panneau isolant de la figure 1A comportant un élément de déchirement rapporté sur l'enveloppe.

La variante de réalisation présentée en figure 8A comporte un habitacle 65 réalisé en matière plastique, ou en métal. Cet habitacle 65 est fixé par soudure ou collage sur l'enveloppe 3. L'habitacle 65 comporte un fond 66 muni d'un orifice central 67. Une paroi périphérique 68 entoure le fond 66. Le fond 66 et la paroi 68 définissent conjointement un logement dans lequel est logé un clou 69. Ce clou 69 comporte une tête plate 70 de forme complémentaire à la forme du logement, l'habitacle 65 guidant en déplacement le clou 69. Une extrémité inférieure 71 du clou 69 forme une pointe en regard de l'orifice 67 du fond 66. La pointe 71 présente un diamètre inférieur au diamètre de l'orifice 67 de sorte que la pointe 71 puisse traverser l'orifice 67. Un ressort de rappel 72 disposé entre le fond 66 et la tête 70 du clou 69 exerce sur le clou 69 une force de poussée maintenant, en l'absence de force opposée suffisante, le clou 69 à distance du fond 66.

La paroi 68 de l'habitacle 65 comporte deux rainures 73 traversantes. Ces rainures 73 s'étendent depuis une extrémité distale 74 de la paroi 68 jusqu'au fond 66. Ces rainures 73 sont diamétralement opposées dans la paroi 68 l'une par rapport à l'autre, typiquement, les rainures 73 sont en regard l'une de l'autre.

Un câble 75 est ancré sur l'enveloppe 3 en ses deux extrémités. Un tronçon central 76 du câble 75 est traversant des deux rainures 73 de l'habitacle 65. Entre les deux rainures 73, le tronçon central 76 est en prise sur une face supérieure 77 de la tête 70 de clou 69, la face supérieure 77 de la tête 70 étant opposée à la face de la tête 70 sur laquelle fait pression le ressort de rappel 72. Afin de garantir le maintien du tronçon central 76 dans les rainures 73, le câble 75 est ancré sur l'enveloppe 3 de manière à être en pré-contrainte contre la tête 70 du clou 69, une telle pré-contrainte n'exerçant pas sur le clou 69 une force suffisante pour s'opposer au ressort de rappel 72. Dans une variante non représentée, un couvercle peut être monté sur l'habitacle 65, garantissant d'une part le maintien du clou 69 dans l'habitacle 65 et, d'autre part, le maintien du tronçon central 76 dans les rainures 73.

La figure 8B représente un perfectionnement du mode de réalisation de la figure 8A dans lequel il est prévu des points de renvoi 78 du câble 75. De tels points de renvois 78 sont situés sur l'enveloppe 3 au niveau de la soudure entre l'habitacle 65 et l'enveloppe 3. Ces points de renvois 78 sont par exemple du type poulies, anneau de guidage ou autre. De tels points de renvois 78 limitent les risques d'accrochage du câble 75 en cas de manipulation du panneau et donc les risques d'application involontaire d'une force sur le clou 69 rapprochant le clou de l'enveloppe 3.

La figure 8C est une vue en coupe partielle d'un panneau isolant tel qu'en figure 1B comportant un élément de déchirement de la figure 8A.

En présence d'une surpression dans l'espace interne 9, l'enveloppe 3 est déformée et présente une face bombée. La courbure de l'enveloppe 3 impose un cheminement au câble 75 qui provoque sa mise en tension. Cette tension du câble 75 se répercute sur le tronçon central 76 qui applique sur la tête 70 du clou 69 une force s'opposant à la force de maintien du ressort 72. La force exercée par le tronçon central 76 sur la tête 70 repousse la pointe 71 du clou 69 vers l'orifice du fond de l'habitacle. En traversant l'orifice 67 du fond 66 de l'habitacle 65, la pointe du clou 69 perce l'enveloppe 3 et permet la mise en contact de l'espace interne 9 avec l'environnement extérieur 16 du panneau 1, libérant ainsi le gaz contenu dans l'espace interne 9.

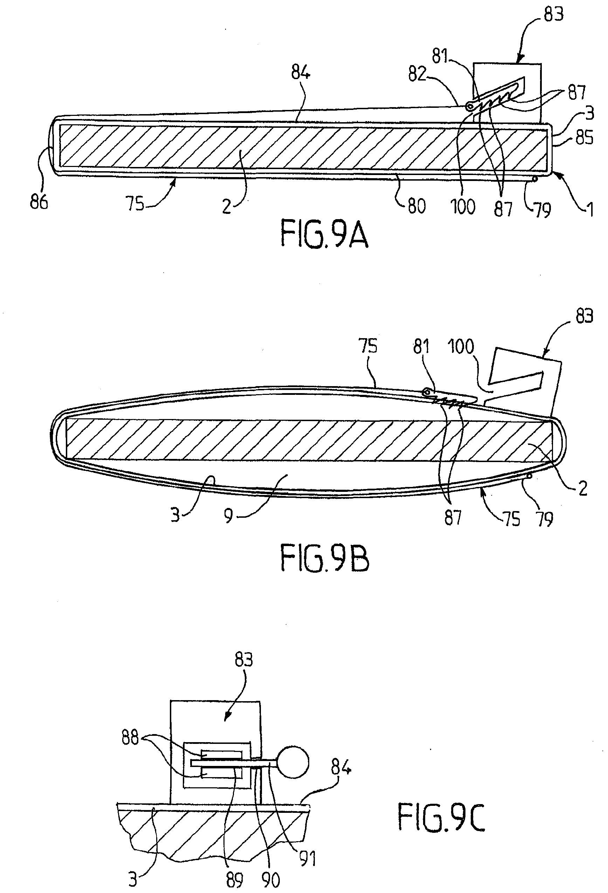

Les figures 9A et 9B sont des vues en coupe longitudinale d'un panneau, respectivement tels qu'en figure 1A et 1B, comportant un harpon

Le mode de réalisation représenté en figure 9A est une variante du mode de réalisation représenté sur les figures 8. Seule une première extrémité 79 du câble 75 est ancrée sur l'enveloppe 3. La première extrémité 79 du câble 75 est ancrée sur l'enveloppe 3 en périphérie d'une face inférieure 80 du panneau 1. Un harpon 81 est monté sur une seconde extrémité 82 du câble 75. Un logement 83 pour le harpon 81 est ancré sur l'enveloppe 3 au niveau de la face supérieure 84 du panneau 1 opposée à la face inférieure 80. Le logement 83 est fixé sur l'enveloppe 3 proche d'une même face latérale 85 du panneau 1 que le point d'ancrage de la première extrémité 79. Le logement 83 est orienté vers l'enveloppe 3 et comporte une ouverture 100 proche de l'enveloppe 3. Le câble 75 entoure le panneau 1 et se développe le long de la face inférieure 80 du panneau 1, d'une face latérale 86 du panneau 1 opposée à la face latérale 85 du panneau 1, puis de la face supérieure 84 du panneau 1. Ce cheminement du câble 75 sur une périphérie du panneau 1 garantit qu'en cas de déformation de l'enveloppe 3, une tension est appliquée sur le câble 75.

Dans l'état opérationnel du panneau 1 tel que représenté en figure 9A, le harpon 81 est logé dans le logement 83. Le harpon 81 est orienté dans le logement 83 de manière à présenter des pointes 87 orientées vers l'enveloppe 3.

Lors d'une montée en pression dans l'espace interne 9 tel que représenté en figure 9B, la déformation de l'enveloppe 3 exerce une tension sur le câble 75. Cette tension du câble 75 se répercute par une traction sur le harpon 81 qui est tiré hors du logement 83. L'orientation du logement 83 ainsi que l'orientation du harpon 81 dans le logement 83 entraîne, lors d'une traction amenant le harpon 81 hors du logement 83, les pointes 87 du harpon 81 au contact de l'enveloppe 3. Ce contact entre les pointes 87 et l'enveloppe 3 déchire l'enveloppe 3, mettant en contact l'espace interne 9 et l'environnement extérieur 16 du panneau 1.
La figure 9C est une vue en coupe transversale partielle d'un panneau isolant de la figure 9A dans une variante de réalisation.

Dans cette variante, un manche 88 du harpon 81 comporte un orifice traversant 89. Le logement 83 comporte un orifice traversant 90 correspondant à l'orifice 89. Lorsque le harpon 81 est logé dans le logement 83, les orifices respectivement 89 du manche 88 et 90 du logement sont en vis-à-vis l'un de l'autre. Une goupille 91 est alors insérée dans les deux orifices 89 et 90 simultanément de manière à bloquer le mouvement du harpon 81 dans le logement 83. Une telle goupille 91 assure une sécurité supplémentaire durant la manipulation du panneau 1 en évitant que le harpon 81 ne sorte du logement 83 et ne dégrade le panneau 1 sans que cela ne soit désiré. Afin d'activer le dispositif une fois le panneau 1 installé, la goupille 91 est simplement retirée.

Dans un mode de réalisation non représenté, une extrémité du câble peut être ancrée sur une zone affaiblie de l'enveloppe, la tension du câble exerçant une traction sur cette zone affaiblie apte à déchirer l'enveloppe. De même, un système de goupille tel que présenté en regard de la figure 9C peut être installé sur le clou décrit dans les figures 8.

Les figures 10A et 10B sont des vues partielles respectivement en coupe et du dessus d'un panneau isolant sous vide comportant une enveloppe rigide déformable présentant une zone de rupture. Dans ce mode de réalisation, l'enveloppe du panneau 1 est réalisée sous la forme d'une coque 92 en polymère rigide déformable mais non pliable. La coque 92 comporte une zone de rupture 93 dont l'épaisseur 94 est inférieure à l'épaisseur 95 de la coque 92 hors de la zone de rupture 93. La zone de rupture 93 est de forme circulaire et présente des fentes 96 d'amorce de rupture s'étendant radialement un centre 97 de la zone de rupture 93. Une grille de sécurité 98 est installée sur une face interne 99 de la coque 92 au niveau de la zone de rupture 93. L'épaisseur 94 de la zone de rupture 93 associée à la présence des fentes 96 affaiblit la résistance mécanique de la coque 92 au niveau de la zone de rupture 93.

Lors de la mise sous vide du panneau 1, la grille de sécurité 98 évite toute rupture non désirée de la zone de rupture 93 en la renforçant.

Inversement, en présence d'une surpression dans l'espace interne 9, la grille de sécurité 98 n'apporte aucun renforcement à la zone de rupture 93 qui, de par sa résistance mécanique réduite, se rompt facilement sous l'effet de la surpression. La rupture de la zone de rupture 93 met en contact l'espace interne 9 et l'environnement extérieur 16 du panneau 1, libérant ainsi le gaz contenu dans l'enveloppe 3.

La technique décrite ci-dessus pour réaliser un bloc isolant peut être utilisée dans différents types de structure isolante tels que des réservoirs, par exemple pour constituer la membrane d'étanchéité primaire et/ou secondaire d'un réservoir de GNL dans une installation terrestre ou dans un ouvrage flottant comme un navire méthanier ou autre.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Bloc isolant comportant :
- une âme (2) réalisée en matière poreuse isolante ;
- une enveloppe (92) externe réalisée en matériau étanche déformable formant un espace interne (9) étanche dans lequel est disposée l'âme du bloc isolant, ledit espace interne présentant dans un état opérationnel du bloc isolant une dépression par rapport à un environnement extérieur (16) du bloc isolant ;
- un élément de dégradation de l'enveloppe apte à dégrader l'enveloppe en réponse à une surpression dans l'espace interne de l'enveloppe par rapport à l'environnement extérieur du bloc isolant causant une déformation de l'enveloppe, de sorte que la dégradation de l'enveloppe par l'élément de dégradation mette en communication l'espace interne de l'enveloppe avec l'environnement extérieur du bloc isolant,
et dans lequel l'élément de dégradation comporte une zone de rupture (93) de l'enveloppe, la zone de rupture étant apte à se dégrader préalablement aux autres zones constitutives de l'enveloppe en réponse à une surpression dans l'espace interne de l'enveloppe par rapport à l'environnement extérieur du bloc isolant,
la zone de rupture (93) de l'enveloppe présentant une épaisseur (94) inférieure à l'épaisseur (95) de l'enveloppe (92) hors de la zone de rupture, la zone de rupture ayant une résistance mécanique à la surpression dans l'espace interne de l'enveloppe par rapport à l'environnement extérieur du bloc isolant inférieure à la résistance mécanique de l'enveloppe hors de la zone de rupture,
**caractérisé en ce que** la zone de rupture (93) est de forme circulaire et des fentes (96) d'amorce de rupture s'étendent radialement depuis un centre 97 de la zone de rupture 93, une grille de sécurité 98 étant installée sur une face interne 99 de l'enveloppe (92) au niveau de la zone de rupture (93).

2. Bloc isolant comportant :
- une âme (2) réalisée en matière poreuse isolante ;
- une enveloppe (3) externe réalisée en matériau étanche déformable formant un espace interne (9) étanche dans lequel est disposée l'âme du bloc isolant, ledit espace interne présentant dans un état opérationnel du bloc isolant une dépression par rapport à un environnement extérieur (16) du bloc isolant ;
- un élément de dégradation de l'enveloppe apte à dégrader l'enveloppe en réponse à une surpression dans l'espace interne de l'enveloppe par rapport à l'environnement extérieur du bloc isolant causant une déformation de l'enveloppe, de sorte que la dégradation de l'enveloppe par l'élément de dégradation mette en communication l'espace interne de l'enveloppe avec l'environnement extérieur du bloc isolant,
et dans lequel l'élément de dégradation comporte une zone de rupture de l'enveloppe, la zone de rupture étant apte à se dégrader préalablement aux autres zones constitutives de l'enveloppe en réponse à une surpression dans l'espace interne de l'enveloppe par rapport à l'environnement extérieur du bloc isolant, l'enveloppe (3) comportant une pluralité de feuilles (4) entourant l'âme, la pluralité de feuilles étant soudées ensemble en périphérie extérieure du bloc isolant le long d'une bordure de soudure (8), l'enveloppe comportant une soudure de la pluralité de feuilles formant une zone de concentration des contraintes apte à concentrer des contraintes de pelage au niveau de ladite zone de concentration des contraintes en réponse à la surpression dans l'espace interne de l'enveloppe par rapport à l'environnement extérieur du bloc isolant, la zone de concentration des contraintes comprenant la zone de rupture,
**caractérisé en ce que** l'enveloppe comporte un point de soudure supplémentaire (21) réalisé entre la pluralité de feuilles, le point de soudure supplémentaire étant situé à l'intérieur d'un périmètre défini par la bordure de soudure, en sus de la bordure de soudure ledit point de soudure formant ladite zone de concentration des contraintes.

3. Bloc isolant selon la revendication 2, dans lequel le point de soudure présente une forme triangulaire, un coté proximal (22) du point de soudure triangulaire étant parallèle à une section (23) de la bande de soudure (8C) située en regard dudit point de soudure triangulaire (21), ledit coté proximal (22) étant le coté du point de soudure triangulaire (21) le plus éloigné de la bande de soudure (8C).

4. Bloc isolant comportant :
- une âme (2) réalisée en matière poreuse isolante ;
- une enveloppe (3) externe réalisée en matériau étanche déformable formant un espace interne (9) étanche dans lequel est disposée l'âme du bloc isolant, ledit espace interne présentant dans un état opérationnel du bloc isolant une dépression par rapport à un environnement extérieur (16) du bloc isolant ;
- un élément de dégradation de l'enveloppe apte à dégrader l'enveloppe en réponse à une surpression dans l'espace interne de l'enveloppe par rapport à l'environnement extérieur du bloc isolant causant une déformation de l'enveloppe, de sorte que la dégradation de l'enveloppe par l'élément de dégradation mette en communication l'espace interne de l'enveloppe avec l'environnement extérieur du bloc isolant,
**caractérisé en ce que** l'élément de dégradation de l'enveloppe comporte un élément de déchirement rapporté (24, 44, 52) présentant un angle vif (31, 42, 43, 49, 55, 71, 87), l'élément de déchirement étant disposé de manière qu'une surpression dans l'espace interne de l'enveloppe par rapport à l'environnement extérieur du bloc isolant amène l'angle vif de l'élément rapporté et l'enveloppe en contact l'un de l'autre de manière à dégrader l'enveloppe.

5. Bloc isolant selon la revendication 4 dans lequel l'élément de déchirement rapporté (24) est situé entre l'enveloppe et l'âme du bloc isolant, l'élément de déchirement rapporté comportant une partie fixe (24A) par rapport à l'âme du bloc isolant et une partie mobile (24B) par rapport à l'âme du bloc isolant, l'enveloppe comportant une première partie d'enveloppe (3B) solidaire en déplacement de la partie mobile de l'élément rapporté d'une part et, d'autre part, une seconde partie d'enveloppe (3A) solidaire de la partie fixe de l'élément de déchirement rapporté, la première partie d'enveloppe étant apte à éloigner de l'âme la partie mobile de l'élément de déchirement par déformation de l'enveloppe en réponse à la surpression dans l'espace interne de l'enveloppe par rapport à l'environnement extérieur du bloc isolant, la partie mobile de l'élément de déchirement rapporté comportant en outre un angle vif apte à déchirer l'enveloppe en entrant au contact de l'enveloppe en réponse à la surpression.

6. Bloc isolant selon la revendication 5, dans lequel, dans l'état opérationnel du bloc isolant, l'angle vif (42, 43) de la partie mobile de l'élément de déchirement rapporté est escamoté dans un logement (34) de la partie fixe de l'élément de déchirement rapporté, un déplacement de la partie mobile de l'élément de déchirement rapporté en réponse à la surpression étant apte à déplacer l'angle vif hors de son logement et à amener l'angle vif de la partie mobile de l'élément rapporté en contact avec l'enveloppe.

7. Bloc isolant selon la revendication 4, dans lequel l'élément rapporté (44, 52) est situé hors de l'espace interne de l'enveloppe et est fixe par rapport à l'âme du bloc isolant, l'angle vif de l'élément rapporté étant en vis-à-vis d'une portion déformable de l'enveloppe dans l'état opérationnel du bloc isolant, la portion déformable de l'enveloppe étant apte à se déchirer au contact de l'angle vif en réponse à la surpression.

8. Bloc isolant selon la revendication 4, comportant en outre :
- une enceinte extérieure (44) fermée formant un réceptacle, l'enveloppe étant logée dans ledit réceptacle, et
- un matériau de calage (50) isolant et compressible inséré entre l'enceinte extérieure et l'enveloppe,
- l'élément de déchirement (49) étant disposé sur une face interne de l'enceinte, l'angle vif de l'élément de déchirement rapporté étant en vis-à-vis d'une portion déformable de l'enveloppe dans l'état opérationnel du bloc isolant, la portion déformable de l'enveloppe étant apte à se déchirer au contact de l'angle vif en réponse à la surpression.

9. Bloc isolant selon la revendication 8, dans lequel une matière isolante et non compressible en réponse à une surpression dans l'espace interne (9) de l'enveloppe (3) par rapport à l'environnement extérieur (16) est située dans le réceptacle formé par l'enceinte extérieure (44) entre l'enveloppe (3) et un fond (45) de l'enceinte extérieure (44), l'élément de déchirement (49) étant disposé sur la face interne d'un couvercle (47) de l'enceinte extérieure (44).

10. Bloc isolant selon l'une des revendication 1 à 4, comportant un câble (75) dont une première extrémité est ancrée sur l'enveloppe à un premier point d'ancrage, le câble se développant le long d'une face externe de l'enveloppe présentant dans un état opérationnel du bloc isolant une surface plane et dans un état de surpression de l'espace interne de l'enveloppe une surface bombée vers l'extérieur, le bombement exerçant sur le câble une tension, ladite tension du câble étant apte à actionner un élément de dégradation (69, 81) de l'enveloppe.

11. Bloc isolant selon la revendication 10, dans lequel la deuxième extrémité du câble est ancrée sur une zone de rupture de l'enveloppe de sorte que la tension du câble exerce une force de traction sur la zone de rupture de l'enveloppe, la zone de rupture étant apte à se dégrader préalablement aux autres zones constitutives de l'enveloppe en présence de la traction exercée par la tension du câble.

12. Bloc isolant selon la revendication 10, dans lequel l'élément de dégradation de l'enveloppe comporte un élément de déchirement rapporté (69) présentant un angle vif, une seconde extrémité du câble étant ancrée sur l'enveloppe, le câble comportant une portion en prise sur l'élément de déchirement rapporté de manière à ce qu'une tension du câble exerce sur l'élément de déchirement rapporté une force de poussée apte à amener l'angle vif dudit élément de déchirement rapporté en contact avec l'enveloppe.

13. Bloc isolant selon la revendication 10, dans lequel une seconde extrémité du câble est ancrée à un élément de dégradation (81) de l'enveloppe comportant un angle vif, une tension du câble en réponse à une surpression dans l'enveloppe exerce sur l'élément de déchirement une force de traction apte à amener l'angle vif dudit élément de déchirement rapporté en contact avec l'enveloppe.

## Patentansprüche

1. Isolationseinheit umfassend:
- einen aus einem porösen Isolationsmaterial bestehenden Kern (2);
- eine äußere Hülle (92) aus formbaren dichten Material, welche einen inneren dichten Bereich (9) bildet, in dem der Kern der Isolationseinheit angeordnet ist, wobei der innere Bereich in einem Betriebszustand der Isolationseinheit im Verhältnis zu einer äußeren Umgebung (16) der Isolationseinheit einen Unterdruck aufweist;
- ein Degradationselement, welches dazu geeignet ist, die Hülle als Reaktion auf einen Überdruck im inneren Bereich der Hülle im Verhältnis zur äußeren Umgebung der Isolationseinheit, welcher die Hülle verformt, zu degradieren, so dass die Degradation der Hülle durch das Degradationselement den inneren Bereich der Hülle mit der äußeren Umgebung der Isolationseinheit in Verbindung setzt,
und wobei das Degradationselement eine Bruchstelle (93) der Hülle umfasst, wobei die Bruchstelle dazu geeignet ist, sich vor den anderen konstituierenden Bereichen der Hülle als Reaktion auf einen Überdruck im inneren Bereich der Hülle im Verhältnis zur äußeren Umgebung der Isolationseinheit zu degradieren,
und wobei die Bruchstelle (93) der Hülle eine geringere Dicke (94) als die Dicke (95) der Hülle (92) außerhalb der Bruchstelle aufweist, wobei die Bruchstelle einen mechanischen Widerstand gegen den Überdruck im inneren Bereich der Hülle im Verhältnis zur äußeren Umgebung der Isolationseinheit aufweist, welcher niedriger ist als der mechanische Widerstand der Hülle außerhalb der Bruchstelle,
**dadurch gekennzeichnet, dass** die Bruchstelle (93) rund ist und Spalten (96) der Bruchansätze sich radial vom Zentrum(97)der Bruchstelle (93) aus erstrecken, wobei ein Sicherheitsgitter (98) auf einer Innenseite (99) der Hülle (92) auf Höhe der Bruchstelle (93) angeordnet ist.

2. Isolationseinheit umfassend:
- einen aus einem porösen Isolationsmaterial bestehenden Kern (2);
- eine äußere Hülle (3) aus formbaren dichten Material, welche einen inneren dichten Bereich (9) bildet, in dem der Kern der Isolationseinheit angeordnet ist, wobei der innere Bereich in einem Betriebszustand der Isolationseinheit im Verhältnis zu einer äußeren Umgebung (16) der Isolationseinheit einen Unterdruck aufweist;
- ein Degradationselement, welches dazu geeignet ist, die Hülle als Reaktion auf einen Überdruck im inneren Bereich der Hülle im Verhältnis zur äußeren Umgebung der Isolationseinheit, welcher die Hülle verformt, zu degradieren, so dass die Degradation der Hülle durch das Degradationselement den inneren Bereich der Hülle mit der äußeren Umgebung der Isolationseinheit in Verbindung setzt,
und wobei das Degradationselement eine Bruchstelle (93) der Hülle umfasst, wobei die Bruchstelle dazu geeignet ist, sich vor den anderen konstituierenden Bereichen der Hülle als Reaktion auf einen Überdruck im inneren Bereich der Hülle im Verhältnis zur äußeren Umgebung der Isolationseinheit zu degradieren, wobei die Hülle (3) eine Vielzahl von Blättern (4) umfasst, welche den Kern umschließen, wobei die Vielzahl der Blätter im äußeren Randbereich der Isolationseinheit entlang eines Schweißrandes (8) zusammengeschweißt sind, wobei die Hülle eine Verschweißung der Vielzahl der Blätter, welche einen Spannungskonzentrationsbereich bilden, welcher dazu geeignet ist, Schälspannungen auf Ebene des Spannungskonzentrationsbereiches zu konzentrieren als Reaktion auf den Überdruck im inneren Bereich der Hülle im Verhältnis der äußeren Umgebung der Isolationseinheit, umfasst, wobei der Spannungskonzentrationsbereich die Bruchstelle umfasst,
**dadurch gekennzeichnet, dass** die Hülle einen weiteren, aus der Vielzahl der Blätter gebildeten Schweißpunkt (21) umfasst, wobei der Schweißpunkt im Inneren eines, durch den Schweißrand definierten, Perimeters angeordnet ist, wobei der Schweißpunkt zusätzlich zur Schweißkante den Spannungskonzentrationsbereich bildet.

3. Isolationseinheit gemäß Anspruch 2, wobei der Schweißpunkt dreieckig ist, wobei eine proximale Seite (22) des dreieckigen Schweißpunktes parallel zu einem Bereich (23) der Schweißkante (8C), welcher gegenüber dem dreieckigen Schweißpunkt liegt, angeordnet ist, wobei die proximale Seite (22) die Seite des dreieckigen Schweißpunktes (21) ist, welche am weitesten von der Schweißkante (8C) entfernt ist.

4. Isolationseinheit umfassend:
- einen aus einem porösen Isolationsmaterial bestehenden Kern (2);
- eine äußere Hülle (3) aus formbaren dichten Material, welche einen inneren (9) dichten Bereich bildet, in dem der Kern der Isolationseinheit angeordnet ist, wobei der innere Bereich in einem Betriebszustand der Isolationseinheit im Verhältnis zu einer äußeren Umgebung (16) der Isolationseinheit einen Unterdruck aufweist;
- ein Degradationselement, welches dazu geeignet ist, die Hülle als Reaktion auf einen Überdruck im inneren Bereich der Hülle im Verhältnis zur äußeren Umgebung der Isolationseinheit, welcher die Hülle verformt, zu degradieren, so dass die Degradation der Hülle durch das Degradationselement den inneren Bereich der Hülle mit der äußeren Umgebung der Isolationseinheit in Verbindung setzt,
**dadurch gekennzeichnet dass**,
das Degradationselement der Hülle ein eingebrachtes Zerreißelement (24, 44, 52) umfasst, welches einen spitzen Winkel (31, 42, 43, 49, 55, 71, 87) aufweist, wobei das Zerreißelement so angeordnet ist, dass ein Überdruck im inneren Bereich der Hülle im Verhältnis zur äußeren Umgebung der Isolationseinheit den spitzen Winkel des eingebrachten Elementes und die Hülle miteinander in Kontakt bringt, so dass die Hülle degradiert wird.

5. Isolationseinheit gemäß Anspruch 4, wobei das eingebrachte Zerreißelement (24) zwischen der Hülle und dem Kern der Isolationseinheit angeordnet ist, wobei das eingebrachte Zerreißelement einen fixen Teil (24A) im Verhältnis zum Kern der Isolationseinheit und einen beweglichen Teil (24B) im Verhältnis zum Kern der Isolationseinheit umfasst, wobei die Hülle einerseits einen ersten Teil der Hülle (3B), welcher fest mit der Verschiebung des beweglichen Teils des angebrachten Elements verbunden ist, und anderseits, einen zweiten Teil der Hülle (3A), welcher fest verbunden mit dem fixen Teil des angebrachten Zerreißelementes ist, umfasst, wobei der erste Teil der Hülle dazu geeignet ist, sich vom Kern des beweglichen Teils des Zerreißelementes durch Verformung der Hülle als Reaktion auf den Überdruck im inneren Bereich der Hülle im Verhältnis zur äußeren Umgebung der Isolationseinheit zu entfernen, wobei der bewegliche Teil des eingebrachten Zerreißelementes weiterhin einen spitzen Winkel umfasst, welcher dazu geeignet ist, die Hülle zu zerreißen, indem er als Reaktion auf den Überdruck mit der Hülle in Kontakt tritt.

6. Isolationseinheit gemäß Anspruch 5, wobei, im Betriebszustand der Isolationseinheit der spitze Winkel (42,43) des beweglichen Teils des Zerreißelementes in einem Gehäuse (34) des fixen Teils des eingebrachten Zerreißelementes versenkbar ist, wobei eine Verschiebung des beweglichen Teils des eingebrachten Zerreißelementes als Reaktion auf den Überdruck dazu geeignet ist, den spitzen Winkel aus seinem Gehäuse herauszubewegen und den spitzen Winkel des beweglichen Teils das eingebrachten Elementes in Kontakt mit der Hülle zu bringen.

7. Isolationseinheit gemäß Anspruch 4, wobei das eingebrachte Element (44,52) außerhalb des inneren Bereiches der Hülle angeordnet ist und im Verhältnis zum Kern der Isolationseinheit fix ist, wobei der spitze Winkel des eingebrachten Elementes gegenüber einem formbaren Teil der Hülle im Betriebszustand der Isolationseinheit angeordnet ist, wobei der formbare Teil der Hülle dazu geeignet ist, bei Kontakt mit dem spitzen Winkel als Reaktion auf den Überdruck zu zerreißen.

8. Isolationseinheit gemäß Anspruch 4, umfassend weiterhin:
- eine äußere geschlossene Einfassung (44), welche ein Gefäß bildet, wobei die Hülle in dem Gefäß angeordnet ist, und
- ein isolierendes und komprimierbares Füllmaterial (50), welches zwischen der äußeren Einfassung und der Hülle eingebracht ist,
- ein Zerreißelement (49), welches auf einer inneren Seite der Einfassung angeordnet ist, wobei der spitze Winkel des eingebrachten Zerreißelementes gegenüber eines formbaren Teils der Hülle im Betriebszustand der Isolationseinheit angeordnet ist, wobei der formbare Teil der Hülle, dazu geeignet ist, im Kontakt mit dem spitzen Winkel als Reaktion auf den Überdruck zu zerreißen.

9. Isolationseinheit gemäß Anspruch 8, wobei ein Isolationsmaterial, welches als Reaktion auf den Überdruck im inneren Bereich (9) der Hülle (3) im Verhältnis zur äußeren Umgebung (16) nicht komprimierbar ist, in dem Gefäß, welches durch die äußerer Einfassung (44) zwischen der Hülle (3) und einem Boden (45) der äußeren Einfassung (44) gebildet ist, angeordnet ist, wobei das Zerreißelement (49) auf der inneren Seite eines Deckels (47) der äußeren Einfassung (44) angeordnet ist.

10. Isolationseinheit gemäß den Ansprüchen 1 bis 4, umfassend ein Kabel (75) von dem ein erster Endabschnitt auf der Hülle an einem ersten Befestigungspunkt angebracht ist, wobei das Kabel sich entlang einer äußeren Fläche der Hülle erstreckt, welche in einem Betriebszustand der Isolationseinheit plan ist, und in einem Überdruckzustand des inneren Bereiches der Hülle eine nach außen gewölbte Oberfläche ist, wobei die Wölbung auf das Kabel eine Spannung ausübt, wobei die Spannung des Kabels dazu geeignet ist das Degradationselement (69, 81) der Hülle zu betätigen.

11. Isolationseinheit gemäß Anspruch 10, wobei der zweite Endabschnitt des Kabels auf einer Bruchstelle der Hülle angebracht ist, so dass die Spannung des Kabels eine Zugkraft auf die Bruchstelle der Hülle ausübt, wobei die Bruchstelle dazu geeignet ist, sich vor den anderen konstituierenden Bereichen der Hülle aufgrund der durch das Kabel ausgeübten Zugkraft zu degradieren.

12. Isolationseinheit gemäß Anspruch 10, wobei das Degradationselement der Hülle ein eingebrachtes Zerreißelement (69) umfasst, welches einen spitzen Winkel aufweist, wobei ein zweiter Endabschnitt des Kabels auf der Hülle angebracht ist, wobei das Kabel einen Eingriffsbereich auf das angebrachte Zerreißelement umfasst, so dass eine Spannung des Kabels auf das angebrachte Zerreißelement eine Schubkraft ausübt, welche dazu geeignet ist, den spitzen Winkel des Zerreißelementes mit der Hülle in Kontakt zu bringen.

13. Isolationseinheit gemäß Anspruch 10, wobei ein zweiter Endabschnitt des Kabels auf einem einen spitzen Winkel aufweisenden Degradationselementes (81) der Hülle angebracht ist, wobei eine Spannung des Kabels als Reaktion auf den Überdruck in der Hülle auf das Zerreißelement eine Zugkraft ausübt, welche dazu geeignet ist, den spitzen Winkel des Zerreißelementes mit der Hülle in Kontakt zu bringen.

## Claims

1. Isolation unit comprising:
- a core (2) produced from a porous insulating material;
- an outer casing (92) produced from a deformable impervious material forming a sealed inner space (9) in which the core of the isolation unit is positioned, said inner space presenting, in an operational state of the isolation unit, a vacuum relative to an environment (16) outside the isolation unit;
- an element for degrading the casing, capable of degrading the casing in response to an overpressure in the inner space of the casing relative to the environment outside the isolation unit causing a deformation of the casing, so that the degrading of the casing by the degrading element brings the inner space of the casing into communication with the environment outside the isolation unit,
and in which the degrading element comprises an area of rupture (93) of the casing, the rupture area being capable of degrading before the other areas constituting the casing in response to an overpressure in the inner space of the casing relative to the environment outside the isolation unit, the rupture area (93) of the casing presenting a thickness (94) smaller than the thickness (95) of the casing (92) outside the rupture area, the rupture area having a mechanical resistance to the overpressure in the inner space of the casing relative to the environment outside the isolation unit which is lower than the mechanical resistance of the casing outside the rupture area,
**characterised in that** the rupture area (93) is circular in shape and rupture initiating slots (96) extend radially from a centre (97) of the rupture area (93), a safety screen (98) being installed on an inner face 99 of the casing (92) on the rupture area (93).

2. Isolation unit comprising:
- a core (2) produced from a porous insulating material;
- an outer casing (3) produced from a deformable impervious material forming a sealed inner space (9) in which the core of the isolation unit is positioned, said inner space presenting, in an operational state of the isolation unit, a vacuum relative to an environment (16) outside the isolation unit;
- an element for degrading the casing, capable of degrading the casing in response to an overpressure in the inner space of the casing relative to the environment outside the isolation unit causing a deformation of the casing, so that the degrading of the casing by the degrading element brings the inner space of the casing into communication with the environment outside the isolation unit,
and in which the degrading element comprises an area of rupture of the casing, the rupture area being capable of degrading before the other areas constituting the casing in response to an overpressure in the inner space of the casing relative to the environment outside the isolation unit, the casing (3) comprising a plurality of sheets (4) surrounding the core, the plurality of sheets being welded together on the outer periphery of the isolation unit along a welding edge (8), the casing comprising a welding of the plurality of sheets forming a stress concentration area capable of concentrating peeling stresses in said stress concentration area in response to the overpressure in the inner space of the casing relative to the environment outside the isolation unit, the stress concentration area comprising the rupture area, **characterized in that** the casing comprises an additional welding point (21) produced between the plurality of sheets, the additional welding point being located inside a perimeter defined by the welding edge, in addition to the welding edge, said welding point forming said stress concentration area.

3. Isolation unit according to claim 2, in which the welding point presents a triangular shape, a proximal side (22) of the triangular welding point being parallel to a section (23) of the welding strip (8C) located opposite said triangular welding point (21), said proximal side (22) being the side of the triangular welding point (21) furthest from the welding strip (8C).

4. Isolation unit comprising:
- a core (2) produced from a porous insulating material;
- an outer casing (3) produced from a deformable impervious material forming a sealed inner space (9) in which the core of the isolation unit is positioned, said inner space presenting, in an operational state of the isolation unit, a vacuum relative to an environment (16) outside the isolation unit;
- an element for degrading the casing, capable of degrading the casing in response to an overpressure in the inner space of the casing relative to the environment outside the isolation unit causing a deformation of the casing, so that the degrading of the casing by the degrading element brings the inner space of the casing into communication with the environment outside the isolation unit,
**characterised in that** the element for degrading the casing comprises an added tearing element (24, 44, 52) presenting a sharp edge (31, 42, 43, 49, 55, 71, 87), the tearing element being positioned so that an overpressure in the inner space of the casing relative to the environment outside the isolation unit brings the sharp edge of the added element and the casing into contact with each other so as to degrade the casing.

5. Isolation unit according to claim 4, in which the added tearing element (24) is located between the casing and the core of the isolation unit, the added tearing element comprising a fixed part (24A) relative to the core of the isolation unit and a moving part (24B) relative to the core of the isolation unit, the casing comprising firstly a first casing part (3B) joined in movement with the moving part of the added element and secondly a second casing part (3A) joined to the fixed part of the added tearing element, the first casing part being capable of moving the moving part of the tearing element away from the core by deformation of the casing in response to the overpressure in the inner space of the casing relative to the environment outside the isolation unit, the moving part of the added tearing element also comprising a sharp edge capable of tearing the casing by coming into contact with the casing in response to the overpressure.

6. Isolation unit according to claim 5, in which, in the operational state of the isolation unit, the sharp edge (42, 43) of the moving part of the added tearing element is retracted in a housing (34) of the fixed part of the added tearing element, a movement of the moving part of the added tearing element in response to the overpressure being capable of moving the sharp edge out of its housing and bringing the sharp edge of the moving part of the added element into contact with the casing.

7. Isolation unit according to claim 4, in which the added element (44, 52) is located outside the inner space of the casing and is fixed relative to the core of the isolation unit, the sharp edge of the added element being positioned facing a deformable portion of the casing in the operational state of the isolation unit, the deformable portion of the casing being capable of tearing in contact with the sharp edge in response to the overpressure.

8. Isolation unit according to claim 4, additionally comprising:
- a closed outer enclosure (44) forming a receptacle, the casing being housed in said receptacle,
- a compressible insulating cushioning material (50) inserted between the outer enclosure and the casing,
- the tearing element (49) being positioned on an inner face of the enclosure, the sharp edge of the added tearing element being positioned facing a deformable portion of the casing in the operational state of the isolation unit, the deformable portion of the casing being capable of tearing in contact with the sharp edge in response to the overpressure.

9. Isolation unit according to claim 8, in which an insulating material which is not compressible in response to an overpressure in the inner space (9) of the casing (3) relative to the outside environment (16) is located in a receptacle formed by the outer enclosure (44) between the casing (3) and a bottom (45) of the outer enclosure (44), the tearing element (49) being positioned on the inner face of a cover (47) of the outer enclosure (44).

10. Isolation unit according to one of claims 1 to 4, comprising a cable (75) of which a first end is anchored on the casing at a first anchor point, the cable running along an outer face of the casing presenting a flat surface in an operational state of the isolation unit and an outwardly bulging surface in a state of overpressure of the inner space of the casing, the bulging exerting a tension on the cable, said tension of the cable being capable of actuating a element for degrading (69, 81) of the casing.

11. Isolation unit according to claim 10, in which the second end of the cable is anchored on an area of rupture of the casing so that the tension of the cable exerts a traction force on the area of rupture of the casing, the rupture area being capable of degrading before the other areas constituting the casing in the presence of the traction exerted by the tension of the cable.

12. Isolation unit according to claim 10, in which the element for degrading the casing comprises an added tearing element (69) presenting a sharp edge, a second end of the cable being anchored on the casing, the cable comprising a portion engaged on the added tearing element so that a tension of the cable exerts a pushing force on the added tearing element capable of bringing the sharp edge of said added tearing element into contact with the casing.

13. Isolation unit according to claim 10, in which a second end of the cable is anchored to a element for degrading (81) of the casing comprising a sharp edge, and a tension of the cable in response to an overpressure in the casing exerts a traction force on the tearing element capable of bringing the sharp edge of said added tearing element into contact with the casing.
